# EUROPÄISCHE PATENTANMELDUNG

(11) **EP 2 511 393 A1**
(43) Veröffentlichungstag der Anmeldung: **17.10.2012**
(21) Anmeldenummer: 11161914.4
(22) Anmeldetag: 11.04.2011
(51) Int. Cl.: C22C 26/00, C22C 49/14, C01B 31/02

(54) **Matrix mit Nanotubes**

(71) Anmelder: SIEMENS AKTIENGESELLSCHAFT, 80333 München (DE)
(72) Erfinder: Clossen-von Lanken Schulz, Michael, 47661, Issum (DE); Kadau, Kai, 46519, Alpen (DE)

(57) **Zusammenfassung**

Durch die Verwendung von Nanotubes (7) kann die Festigkeit von metallischen Werkstoffen (4) weiterhin deutlich verbessert werden.

## Beschreibung

Die Erfindung betrifft die Verstärkung von Matrizen, insbesondere von metallischen Legierungen durch Nanotubes.

Metallische Matrizen aus stahl-, kobalt- oder nickelbasierten Legierungen weisen für ihre jeweiligen Einsatzgebiete eine hohe Festigkeit auf.

Es ist auch bekannt, durch Keramikpartikel eine Matrix mechanisch zu verstärken.

Nanotubes sind ebenfalls bekannt.

Es ist daher Aufgabe der Erfindung die mechanische Festigkeit von metallischen Legierungen weiterhin zu verbessern.

Die Aufgabe wird gelöst durch eine Matrix gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen
- Figur 1 bis 5: Ausführungsbeispiele der Erfindung,
- Figur 6: eine Turbinenschaufel,
- Figur 7: eine Brennkammer,
- Figur 8: eine Gasturbine,

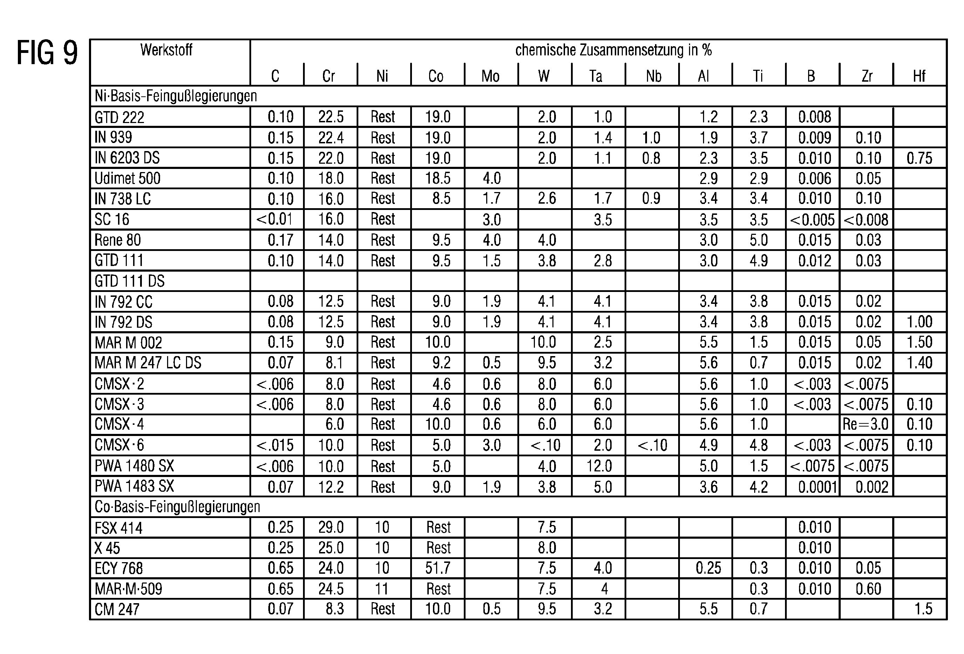

- Figur 9: eine Liste von Superlegierungen.

Die Beschreibung und die Figuren stellen nur Ausführungsbeispiele der Erfindung dar.

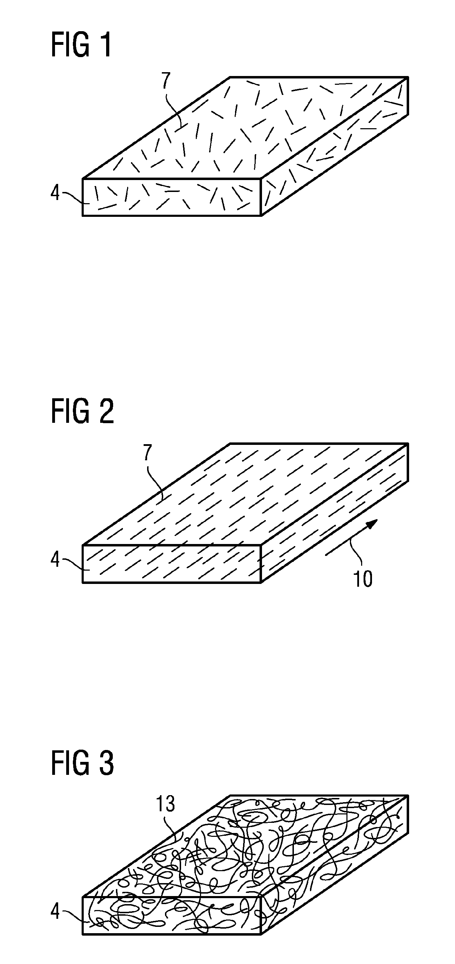

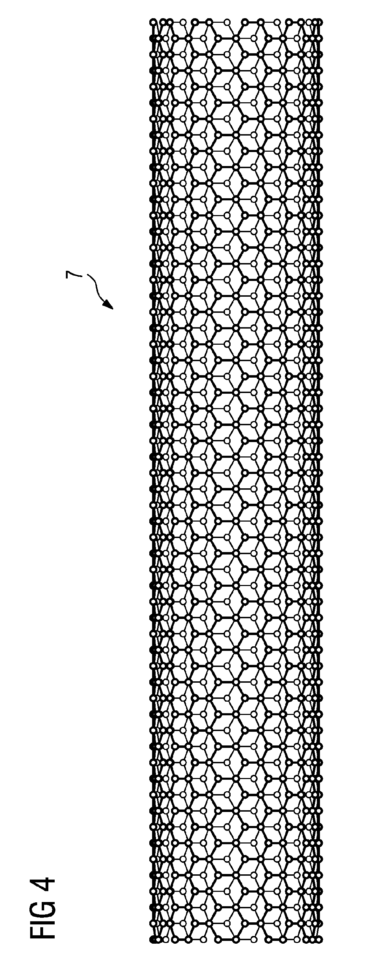

In Figur 1 ist eine Matrix 4, insbesondere aus einer metallischen Legierung, mit Nanotubes 7 (Fig. 4) vorhanden.

Die Nanotubes 7 sind hier vorzugsweise willkürlich orientiert innerhalb der Matrix 4.
Die Matrix ist vorzugsweise eine nickel- oder kobaltbasierte Superlegierung wie von Turbinenschaufeln 120, 130 bekannt.

Gemäß Figur 2 sind die Nanotubes 7 entlang einer Richtung 10 innerhalb der Matrix 4 ausgerichtet.
Nanotubes 7 können mit Hilfe von elektromagnetischen Feldern ausgerichtet werden. Dies kann in vielfältiger Weise geschehen. Eine einfache Möglichkeit besteht durch das Anlegen einer Spannung entlang der langen Achse, welches in US 6,531,820 beschrieben ist. Ebenso können die Nanotubes ausgerichtet in einem Gerüst angeordnet sein und so umgossen werden, wobei das Gerüst beim Schmelzen verschwindet, z. B. durch Verdampfung (wenn es aus einem Harz oder Kunststoff besteht) oder als Schlacke auf der Schmelze.
Prinzipiell können längliche Strukturen (wie Nanotubes 7) auch mit Hilfe von Flusslinien in der Schmelze ausgerichtet werden. Diese Flusslinien können beispielsweise durch Vibrationen in der Schmelze erzeugt werden. Mehrere Vibrationsmoden und Richtungen können somit die Nanotubes 7 auch ungeordnet verteilen oder graduell zwischen Ordnung und Unordnung umschalten.
Vorzugsweise ist dies 10 bei SX- oder kolumnar erstarrten Werkstoffen ebenfalls die Längsrichtung dieser einkristallinen Körner.

Figur 3 zeigt ein Geflecht 13 von Nanotubes, das innerhalb der Matrix 4 angeordnet sind. Das Geflecht 13 führt zur weiteren Festigkeitssteigerung und bildet ein Gerüst in der Matrix 4.

Figur 4 zeigt ein Nanotube 7 aus dem Stand der Technik, das in Figur 1, 2 oder 3 verwendet wird.

Es 7 weist eine Zylinderform auf, wobei die Kohlenstoffatome Honigwabenstrukturen aufweisen und so miteinander verbunden sind, dass sie eine geschlossene Mantelfläche bilden.

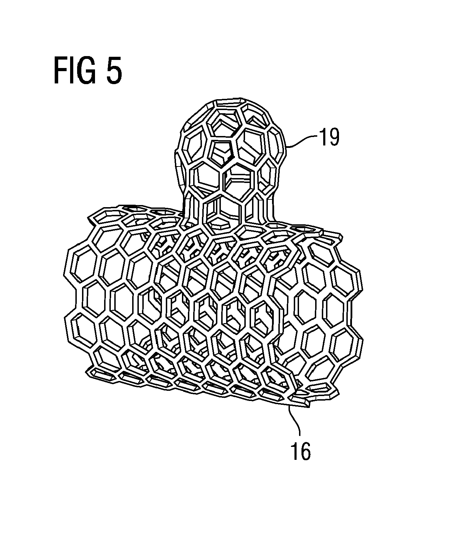

Figur 5 zeigt ein Nanotube 16 mit einer Ausstülpung 19 (Nanobud), die 19 sich vorzugsweise in radialer Richtung erstreckt. Die Ausstülpung 19 führt zu einer zusätzlichen Verankerung in der Matrix 4.
Das Nanotube 16 kann auch mehrere Ausstülpungen 19 haben. Ebenso können Nanotubes mit und ohne Ausstülpungen 19 zusammen verwendet werden (d.h. in Fig. 1, 2 oder 3). Ebenso können die Nanotubes des Geflechts 13 solche Ausstülpungen 19 aufweisen.

Die Nanotubes 7, 16 (Fig. 5) können in den Figuren 1, 2 oder 3 vorzugsweise verschiedene Längen aufweisen.

Vorzugsweise werden in den Figuren 1, 2 oder 3 Nanotubes 7, 16 mit gleicher Länge verwendet.

Je nach lokaler Beanspruchung können die Nanotubes 7, 13, 16 auch nur lokal in der Matrix 4 vorhanden sein, z.B. bei Turbinenschaufeln 120, 130 im Bereich der Anströmkante.

Durch die hohe Festigkeit und die hohe Schmelztemperatur von 3000°C und die gute Anbindung der Nanotubes an nickel- oder kobaltbasierte Werkstoffe wird eine deutliche Verbesserung der Festigkeit, insbesondere bei hohen Temperaturen erreicht.

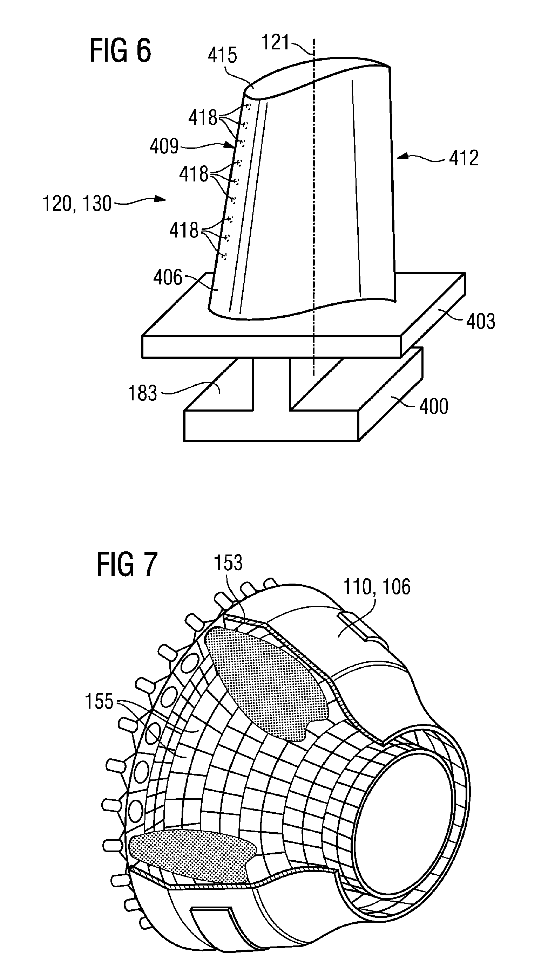

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 7 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

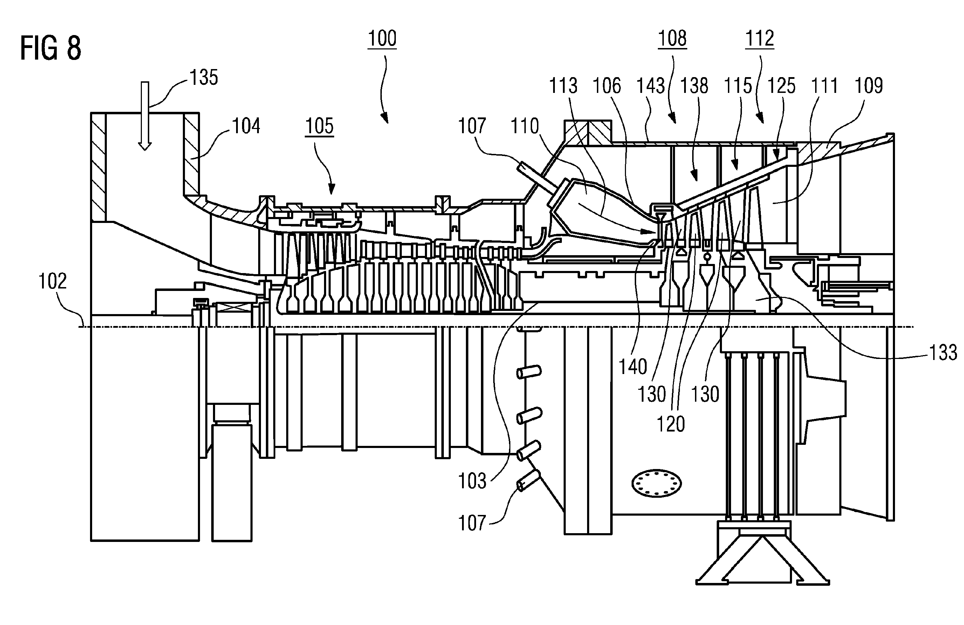

Die Figur 8 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Matrix (4),
die insbesondere metallisch ist,
ganz insbesondere eine metallische Legierung aufweist,
die (4) Nanotubes (7, 13, 16) aufweist.

2. Matrix nach Anspruch 1,
die eine nickel- oder kobaltbasierte Legierung aufweist.

3. Matrix nach Anspruch 1 oder 2,
bei der die Nanotubes (7, 13, 16) willkürlich in der Matrix (4) orientiert sind.

4. Matrix nach einem oder mehreren der Ansprüche 1, 2 oder 3,
bei der ein Geflecht von Nanotubes (13) in der Matrix (4) vorhanden ist.

5. Matrix nach einem oder mehreren der Ansprüche 1, 2, 3 oder 4,
bei der zumindest ein Nanotube (16) an seiner Mantelfläche (16) zumindest eine Ausbuchtung (19) aufweist,
die (19) sich insbesondere radial erstreckt.

6. Matrix nach Anspruch 1, 2, 4 oder 5,
bei der die Nanotubes (7, 16) innerhalb der Matrix (4) ausgerichtet sind.

7. Matrix nach einem oder mehreren der Ansprüche 1 bis 6, bei der die Nanotubes (7, 13, 16) verschiedene Längen aufweisen.

8. Matrix nach einem oder mehreren der Ansprüche 1 bis 6, bei der die Nanotubes (7, 13, 16) die gleiche Länge aufweisen.

9. Matrix nach einem oder mehreren der Ansprüche 1 bis 8, die eine einkristalline oder kolumnare Struktur, insbesondere aus nickelbasierten Legierungen aufweist.

10. Matrix nach einem oder mehreren der Ansprüche 1 bis 9, die mindestens 1vol% Nanotubes (7, 13, 16), insbesondere 5vol% - 40vol% Nanotubes (7, 13, 16) aufweist.

11. Matrix nach einem oder mehreren der Ansprüche 1 bis 10, in der die Nanotubes (7, 13, 16) in der Matrix (4) nur lokal vorhanden sind.
